(19) Europäisches Patentamt
European Patent Office
Office européen des brevets

(11) **EP 1 929 565 B1**

(12) **FASCICULE DE BREVET EUROPEEN**

(45) Date de publication et mention de la délivrance du brevet:
**22.05.2013 Bulletin 2013/21**

(21) Numéro de dépôt: **06794500.6**

(22) Date de dépôt: **26.07.2006**

(51) Int Cl.:
*H01M 8/02* (2006.01)   *H01M 8/10* (2006.01)
*B01F 5/06* (2006.01)

(86) Numéro de dépôt international:
**PCT/FR2006/050749**

(87) Numéro de publication internationale:
**WO 2007/031661 (22.03.2007 Gazette 2007/12)**

(54) **PLAQUE POUR PILE A COMBUSTIBLE**

PLATTE FÜR BRENNSTOFFZELLE

PLATE FOR FUEL CELL

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.09.2005 FR 0509497**

(43) Date de publication de la demande:
**11.06.2008 Bulletin 2008/24**

(73) Titulaire: **Renault S.A.S.**
**92100 Boulogne-Billancourt (FR)**

(72) Inventeur: **GAUDILLAT, Pierre**
**F-75014 Paris (FR)**

(56) Documents cités:
WO-A-02/065566          WO-A-2004/109830
US-A1- 2004 067 405     US-B1- 6 333 019
US-B1- 6 616 327

• **TUBER K ET AL: "Investigation of fractal flow-fields in portable proton exchange membrane and direct methanol fuel cells" JOURNAL OF POWER SOURCES, ELSEVIER, AMSTERDAM, NL, vol. 131, no. 1-2, 14 mai 2004 (2004-05-14), pages 175-181, XP004504667 ISSN: 0378-7753**
• **LI X ET AL: "Review of bipolar plates in PEM fuel cells: Flow-field designs" INTERNATIONAL JOURNAL OF HYDROGEN ENERGY, ELSEVIER PUBLISHER B.V., BARKING, GB, vol. 30, no. 4, mars 2005 (2005-03), pages 359-371, XP004739235 ISSN: 0360-3199**

## Description

La présente invention concerne une plaque pour pile à combustible, notamment pour pile à combustible du type à membrane échangeuse d'ions (PEM), destinée à être montée sur un véhicule automobile.

Les piles à combustible du type PEM comprennent généralement un empilement de plaques bipolaires et de membranes échangeuses d'ions, les membranes étant formées par un électrolyte solide, réalisé par exemple à partir de matériaux polymères.

Les plaques bipolaires sont munies, sur leurs faces en contact avec les membranes, de rainures formant avec lesdites membranes des canaux ou conduits de distribution permettant une circulation des gaz en contact avec la membrane.

Des gaz anodiques circulent d'un côté de la membrane et des gaz cathodiques circulent du côté opposé. Des réactions d'oxydoréduction des gaz anodiques et cathodiques se produisent de part et d'autre de la membrane, avec des échanges d'ions à travers elle, les électrons étant véhiculés par les plaques bipolaires. De l'énergie électrique est ainsi récupérée et utilisée, notamment pour la traction du véhicule automobile.

Lorsque les gaz circulent dans les canaux depuis une entrée vers une sortie, les réactifs sont consommés progressivement. La concentration de réactifs dans le flux circulant dans les canaux se réduit ainsi au fur et à mesure. Cette réduction de réactifs, à fortiori à proximité des sorties de canaux de distribution, peut résulter en une répartition non uniforme des réactifs sur la surface active d'échange de la membrane. Ceci ne permet pas d'atteindre un fonctionnement satisfaisant de la pile.

Ainsi, dans le but d'obtenir de meilleures performances et une fiabilité accrue de la pile à combustible, il est souhaitable d'assurer une distribution homogène des réactifs anodiques et cathodiques sur les zones actives des membranes.

Différentes solutions ont déjà été imaginées pour obtenir une meilleure distribution des réactifs. C'est ainsi que le brevet US 4 988 583 décrit une plaque bipolaire munie sur une de ses faces d'un unique canal de distribution de fluides cheminant d'un bord de la plaque vers un bord opposé, et réalisé à partir d'une pluralité de serpentins continus s'étendant en forme de boustrophédon. Les serpentins sont agencés sur la face de la plaque de manière à être répartis sur la majeure partie de ladite face.

Le brevet US 5 641 586 décrit, quant à lui, une plaque bipolaire comprenant une pluralité de canaux d'entrée et de canaux de sortie de fluides agencés entre eux de manière entrecroisée, les fluides circulant des canaux d'entrée vers les canaux de sortie en passant à travers une couche de diffusion des gaz.

On connaît également, par les documents US-B1-6 616 327 et US-B1-6 333 019, un agencement de conduites d'alimentation et/ou d'évacuation de fluides, notamment pour une pile à combustible comprenant un empilement de plaques, dans lequel des tronçons d'entrée et de sortie sont ménagés sur chacune des plaques de manière à obtenir des conduites de circulation de fluides présentant une configuration fractale étagée.

On connaît aussi, par les documents US-A-2004/0023100 et US-A-2004/0076405, une plaque bipolaire comprenant des conduites d'alimentation et/ou d'évacuation de fluides pourvus d'une branche principale et de branches secondaires successives, de section réduite par rapport à ladite conduite principale, et agencées de manière à obtenir des conduites présentant une configuration fractale.

Les canaux ou conduites d'alimentation et/ou d'évacuation de fluides décrits dans ces documents ne proposent pas un agencement permettant d'améliorer de façon significative une répartition de réactifs, pour l'obtention d'une distribution homogène des réactifs sur la membrane.

La présente invention a donc pour but de remédier à cet inconvénient, en proposant une plaque pour pile à combustible permettant de distribuer de façon homogène des fluides de manière à accroître la sûreté de fonctionnement de ladite pile.

Selon un aspect de l'invention, une plaque pour pile à combustible, notamment du type à membrane échangeuse d'ions, comprend des canaux d'alimentation reliés à un orifice d'admission disposé au centre d'une des faces de la plaque, et des canaux d'évacuation dans lesquels circulent respectivement un flux de fluide réactif à concentration relativement élevée et un flux de fluide réactif à concentration relativement faible.

Les canaux d'alimentation et/ou d'évacuation sont ménagés sur la plaque de façon symétrique, les canaux d'alimentation et d'évacuation présentant des configurations fractales similaires et agencées de manière complémentaire pour obtenir un réseau de canaux entrelacés.

Avec une telle disposition, il devient dès lors possible d'obtenir une répartition plus homogène des réactifs sur la plaque bipolaire.

En effet, la prévision de canaux d'alimentation présentant une géométrie fractale de structure symétrique combinée avec la disposition d'un orifice d'admission au centre d'une face de la plaque, permet une répartition du fluide sur l'ensemble de la plaque selon des cheminements et des débits d'écoulement identiques dans les différentes zones de la plaque.

En outre, la disposition sur une même plaque de canaux d'alimentation et d'évacuation présentant des configurations fractales similaires et agencées de manière complémentaire pour obtenir un réseau de canaux entrelacés permet d'obtenir non seulement un débit d'écoulement identique pour l'alimentation et l'évacuation de la plaque mais également des canaux d'évacuation qui sont entourés par des canaux d'alimentation, en se trouvant à proximité de ceux-ci, ce qui permet d'obtenir une disposition de canaux de circulation dans lesquels le fluide moins riche en réactif est situé au voisinage de canaux de circulation dans lesquels le fluide est riche en réactif.

Avantageusement, les canaux d'alimentation et d'évacuation comprennent au moins deux axes de symétrie.

Préférentiellement, les canaux d'alimentation et d'évacuation comprennent des conduites principales, chaque conduite principale étant pourvue d'une pluralité de branches secondaires successives agencées de manière symétrique par rapport à ladite conduite.

La structure symétrique des branches secondaires permet d'assurer un débit d'écoulement identique pour chaque conduite principale respective.

Dans un mode de réalisation, les longueurs et les sections des branches secondaires successives sont chaque fois égales, à partir d'un point de ramification, pour chaque conduite d'alimentation respective.

Ainsi, la vitesse et les pertes de charge sont à chaque fois égales dans les différentes zones de la plaque quel que soit le débit qui circule, et on obtient une distribution homogène et/ou une évacuation des réactifs, garantissant un fonctionnement optimal de la pile.

Les conduites principales des canaux d'alimentation sont reliées à l'orifice d'admission, et peuvent avantageusement être au nombre de quatre et s'étendre entre ledit orifice et des angles de la plaque.

Avantageusement, les conduites principales des conduites d'évacuation débouchent sur chacun des côtés de la plaque.

Dans un mode de réalisation préféré, laquelle les rapports des sections entre des portions immédiatement consécutives de la conduite principale sont identiques entre eux.

La présente invention sera mieux comprise à l'étude de la description détaillée de modes de réalisation pris à titre d'exemples nullement limitatifs et illustrés par les dessins annexés, sur lesquels :

- les figures 1 et 2 illustrent un exemple d'agencement de canaux de circulation de fluide réactif d'une plaque pour pile à combustible ;
- la figure 3 est une vue de détail de la figure 2 ; et
- la figure 4 illustre un second exemple d'agencement de canaux de circulation de fluide réactif d'une plaque pour pile à combustible.

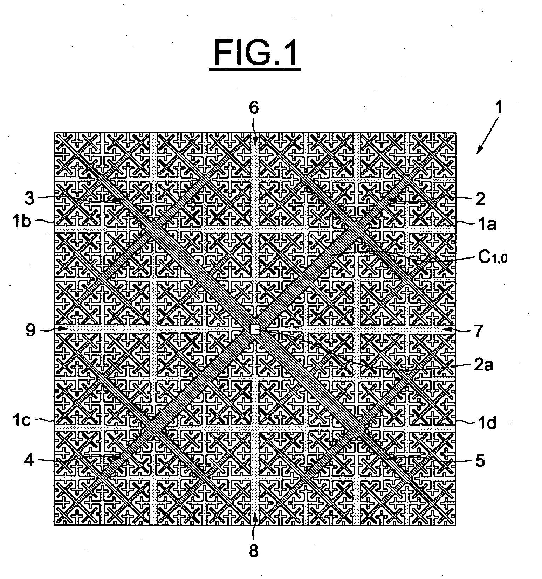

En référence aux figures 1 à 4, on va maintenant décrire différents modes de réalisation de canaux de circulation de fluide réactif pour plaque de pile à combustible.

Une plaque de pile à combustible comprend un certain nombre de rainures qui délimitent entre elles, conjointement avec une membrane échangeuse d'ions, plusieurs canaux dans lesquels circule un fluide réactif.

Sur la figure 1, une plaque référencée 1 dans son ensemble présente une forme générale carrée. La plaque peut être une plaque bipolaire, ou encore une plaque monopolaire. Plusieurs canaux de circulation et d'évacuation sont ménagés sous la forme de rainures s'étendant sur une face de ladite plaque.

La plaque 1 peut être divisée en quatre zones carrées identiques délimitées par deux droites perpendiculaires aux côtés. Les droites et les diagonales de la plaque forment des axes de symétrie, au sens de la géométrie plane.

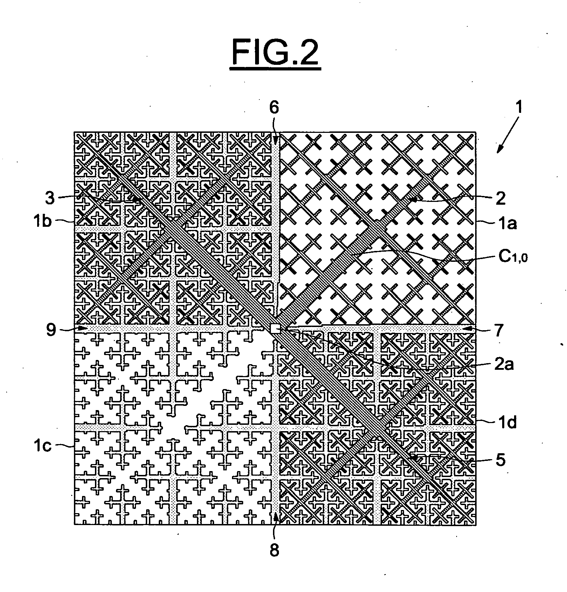

Un premier canal d'alimentation 2 est formé sur la plaque dans une zone carrée la située en haut à droite des figures 1 et 2. Le premier canal 2 d'alimentation comprend une conduite principale $C_1$ s'étendant de façon rectiligne, à partir d'un orifice d'admission 2a ménagé en centre de la face de la plaque 1, jusqu'au voisinage du sommet supérieur droit de la plaque 1. Ladite conduite principale $C_1$ comprend une pluralité de portions $C_{1,0}$ à $C_{5,0}$ s'étendant ainsi suivant la demi-diagonale de la plaque 1. La portion $C_{1,0}$ est connectée à l'orifice d'admission 2a, la portion $C_{5,0}$ s'étendant jusqu'à proximité du sommet supérieur droit. Les portions $C_{1,0}$ à $C_{5,0}$ présentent ici une profondeur constante et une largeur diminuant progressivement de portion en portion.

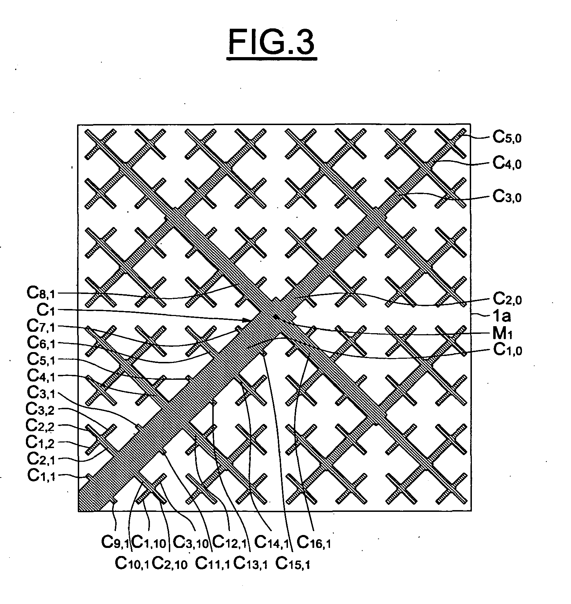

Comme illustré plus visiblement sur la figure 3 représentant une vue de détail du canal 2 d'alimentation dans la zone la, la première portion $C_{1,0}$ de la conduite principale $C_1$ du canal 2 d'alimentation comprend une pluralité de branches secondaires successives rectilignes. La portion $C_{1,0}$ de la conduite principale $C_1$ se divise ici en seize branches secondaires, référencées $C_{1,1}$ à $C_{16,1}$ s'étendant perpendiculairement par rapport à ladite conduite principale, en étant agencées de manière à conserver un espacement constant entre deux branches secondaires immédiatement adjacentes.

Les branches secondaires $C_{1,1}$ à $C_{8,1}$ sont situées du côté gauche de la zone carrée 1a, en considérant la portion $C_{1,0}$, les branches secondaires $C_{9,1}$ à $C_{16,1}$ étant symétriques respectivement aux branches $C_{1,1}$ à $C_{8,1}$, par rapport à ladite portion $C_{1,0}$.

Les branches $C_{1,1}$ et $C_{9,1}$ symétriques par rapport aux branches $C_{3,1}$ et $C_{11,1}$, en considérant les branches $C_{2,1}$ et $C_{10,1}$. Les branches secondaires $C_{2,1}$ et $C_{10,1}$ présentent des longueurs et des sections sensiblement supérieures à celle des branches $C_{1,1}$ et $C_{9,1}$.

Chacune des branches secondaires $C_{2,1}$ et $C_{10,1}$ se subdivise à nouveau en trois branches secondaires successives dérivées, référencées respectivement $C_{1,2}$, $C_{2,2}$, $C_{3,2}$, $C_{1,0}$, $C_{2,0}$ et $C_{3,10}$. Les branches dérivées $C_{1,2}$, $C_{3,2}$, $C_{1,10}$ et $C_{3,10}$ sont perpendiculaires aux branches $C_{2,1}$ et $C_{10,1}$. Les branches $C_{2,2}$ et $C_{2,10}$ sont orientées respectivement dans la même direction que les branches $C_{2,1}$ et $C_{10,1}$. Les branches dérivées d'une branche secondaire sont symétriques par rapport aux branches dérivées de l'autre branche secondaire, en considérant la portion $C_{1,0}$. Les branches secondaires successives $C_{1,2}$, $C_{2,2}$, $C_{3,2}$, $C_{1,0}$, $C_{2,10}$ et $C_{3,10}$ présentent des longueurs et des sections identiques à celle des branches secondaires $C_{1,1}$ et $C_{9,1}$.

La distance entre deux branches secondaires immédiatement adjacentes de la portion $C_{1,0}$ est sensiblement égale à la distance entre le point d'embranchement de la conduite principale $C_{1,0}$ et de la branche secondaire $C_{2,1}$, et le point de ramification de la conduite principale $C_{2,1}$ avec les branches secondaires dérivées successives $C_{1,2}$, $C_{2,2}$ et $C_{3,2}$.

Les branches secondaires $C_{5,1}$ et $C_{13,1}$, $C_{6,1}$ et $C_{14,1}$, $C_{7,1}$ et $C_{15,1}$ sont symétriques respectivement par rapport aux branches secondaires $C_{3,1}$ et $C_{11,1}$, $C_{2,1}$ et $C_{10,1}$, $C_{1,1}$, et $C_{9,1}$, en considérant les branches $C_{4,1}$, et $C_{12,1}$. D'une manière analogue aux branches $C_{2,1}$ et $C_{10,1}$, les branches secondaires $C_{6,1}$ et $C_{14,1}$ se séparent donc en trois branches successives dérivées.

Les branches $C_{4,1}$ et $C_{12,1}$ se divisent chacune, à leurs extrémités, à nouveau en trois branches secondaires successives disposées à 45° l'une par rapport à l'autre, et de dimensions identiques à celles de la branche $C_{2,1}$. Chacune desdites branches secondaires successives se sépare à nouveau en trois branches de dimensions identiques à celles de la branche $C_{1,2}$. La branche $C_{4,1}$, comprend, en outre, deux branches secondaires successives additionnelles obtenues par rotation des branches $C_{3,1}$ et $C_{11,1}$, en considérant le point d'embranchement de la portion $C_{1,0}$ et de la branche $C_{4,1}$. Les branches secondaires successives de la branche $C_{12,1}$ sont symétriques à celles de la branche $C_{4,1}$, par rapport à la portion $C_{1,0}$.

La portion $C_{1,0}$ de la conduite $C_1$, les branches secondaires $C_{1,1}$ à $C_{7,1}$ ét $C_{9,1}$ à $C_{15,1}$ ainsi que leurs branches secondaires successives forment ainsi un premier sous-réseau de conduits d'alimentation dans la zone 1a.

La branche secondaire $C_{8,1}$ s'étend à partir de la conduite principale $C_{1,0}$ jusqu'au voisinage du sommet supérieur gauche de la zone carrée 1a. Les branches secondaires $C_{8,1}$ et $C_{16,1}$ comprennent une pluralité de branches successives symétriques entre elles par rapport à ladite branche secondaire respective, et par rapport à la conduite $C_{1,0}$.

Les branches secondaires successives de la branche secondaire $C_{8,1}$ sont obtenues par rotation de 90° dans le sens horaire, en considérant un point d'embranchement $M_1$ de la conduite principale $C_{1,0}$ et de la branche secondaire $C_{8,1}$, des branches $C_{5,1}$, $C_{13,1}$, $C_{7,1}$, $C_{15,1}$, ainsi que $C_{6,1}$ et $C_{14,1}$ et de leurs branches secondaires successives associées. Ainsi, les branches secondaires de la branche $C_{16,1}$ sont obtenues par rotation de 90° dans le sens trigonométrique, en considérant le point d'embranchement $M_1$ et les branches précitées.

Les branchés $C_{8,1}$ et $C_{16,1}$ se divisent chacune, à leurs extrémités, à nouveau en trois branches secondaires disposées à 45° l'une par rapport à l'autre, chacune desdites branches présentant une structure géométrique et des dimensions identiques à celles de la branche $C_{4,1}$ et comprenant des branches secondaires successives associées disposées de façon analogue. Ainsi, les branches $C_{8,1}$ et $C_{16,1}$ ainsi que leurs branches secondaires successives dérivées forment des second et troisième sous-réseaux de conduits d'alimentation identiques entre eux.

Les portions $C_{2,0}$ à $C_{5,1}$ de la conduite principale $C_1$ sont reliées à une pluralité de branches secondaires et de branches secondaires dérivées de manière à former un quatrième sous-réseau de conduits d'alimentation pouvant être obtenu, à partir du second sous-réseau, par une rotation de 90° dans le sens horaire.

De façon à assurer une parfaite homogénéité de la distribution du fluide, on prévoit, en outre, que la section d'une portion $C_{n,0}$ de la conduite principale $C_1$, dans lequel n peut valoir 2, 3, 4 ou 5, soit le tiers de celle de la portion $C_{n-1,0}$. On voit donc que les pertes de charges dans l'écoulement du fluide à partir du point de ramification $M_1$ sont exactement les mêmes pour chacun des second, troisième et quatrième sous-réseaux.

A cet effet et comme mentionné précédemment, on a également pris de préférence la précaution que la distance entre deux branches secondaires immédiatement adjacentes de la conduite principale $C_1$ soit sensiblement égale à la distance entre deux branches secondaires successives immédiatement adjacentes de la branche secondaire respective.

En considérant à nouveau les figures 1 et 2, la plaque 1 comprend également des second, troisième et quatrième canaux d'alimentation, référencés 3 à 5, respectivement formés dans des zones carrées 1b à 1d de ladite plaque et s'étendant chacun à partir de l'orifice d'admission 2a jusqu'au voisinage du sommet opposé de la zone carrée correspondante. Lesdites zones 1b à 1d sont respectivement situées en haut à gauche, en bas à gauche, et en bas à droite. Chacun desdits canaux d'alimentation comprend également une conduite principale et une pluralité de branches secondaires successives (non référencés).

Les second troisième et quatrième canaux d'alimentation 3 à 5 sont obtenus respectivement à partir du premier canal 2, par une rotation dans le sens trigonométrique ayant pour centre l'orifice d'admission 2a, de 90°, 180° et 270°.

Les canaux d'alimentation 2 à 5 sont ainsi symétriques deux à deux par rapport aux droites perpendiculaires aux côtés de la plaque 1 délimitant les zones 1a à 1d. L'écoulement du fluide à travers les canaux s'effectue donc de manière parfaitement homogène et identique dans ces différentes zones.

Le réseau de conduits d'alimentation ainsi formé par les canaux 2 à 5 présente ainsi une propriété géométrie de similitude interne, une partie quelconque dudit réseau présentent une apparence sensiblement identique à son apparence globale. Le réseau présente ainsi une configurations fractale. Bien entendu, la propriété d'invariance par changement d'échelle est limitée par la faisabilité technique des perçages pour les obtenir les branches secondaires de petit diamètre.

La plaque 1 comprend également des canaux d'évacuation principaux, ici au nombre de quatre et référencés 6 à 9, s'étendant respectivement à partir du milieu du bord supérieur, du milieu du bord latéral gauche, du milieu du bord inférieur, et du milieu du bord latéral droit, en direction de l'orifice d'admission 2a avec une largeur diminuant progressivement. Les canaux d'évacuation 6 à 9 présentent une structure géométrique semblable à celle des canaux d'alimentation 3 à 5, mais présentent des dimensions réduites dans un rapport de

$$\frac{\sqrt{2}}{2}.$$ Les canaux d'évacuation 6 à 9 présentent une configuration fractale similaire, seules les longueurs et les sections variant.

Les canaux d'évacuation 7 à 9 peuvent être obtenus, à partir du premier canal 6, respectivement par une rotation dans le sens trigonométrique ayant pour centre l'orifice d'admission 2a, de 90°, 180° et 270°. Les branches successives d'un canal d'évacuation s'étendent dans deux zones carrées successives de la plaque 1. Les canaux d'évacuation 6 à 9 sont symétriques deux à deux par rapport aux diagonales de la plaque 1.

La plaque 1 comprend également des canaux d'évacuation secondaires dans chacune des zones carrées la à 1d présentant des motifs géométriques identiques à ceux des canaux d'évacuation 6 à 9. Dans la zone carrée la, la plaque 1 comprend un premier ensemble de canaux d'évacuation (non référencés) s'étendant à partir du bord supérieur de ladite zone. Ces canaux secondaires peuvent être obtenus à partir des branches secondaires de la conduite d'évacuation 7 situées dans la zone carrée la, par une rotation de 90° dans le sens trigonométrique ayant pour centre le point d'embranchement $M_1$.

Dans la zone 1a, la plaque 1 comprend également un second ensemble de canaux d'évacuation secondaires s'étendant à partir du bord droit de cette zone. Ces canaux sont obtenus, à partir des canaux d'évacuation du premier ensemble, par une rotation de 90° dans le sens horaire en considérant le point d'embranchement $M_1$.

De manière analogue, les zones carrées 1b à 1d comprennent également des premier et second ensembles de canaux d'évacuation secondaire. Dans la zone 1c, les canaux d'évacuation secondaires sont obtenus par symétrie des canaux secondaires de la zone 1a, en considérant la diagonale de la plaque passant par le sommet inférieur droit et par le sommet supérieur gauche. Dans les zones 1b et 1d, les canaux d'évacuation secondaires sont obtenus respectivement à partir des canaux des zones 1a et 1c par symétrie, en considérant la droite verticale perpendiculaire aux bords supérieur et inférieur et délimitant les zones 1b et 1c, des zones 1a et 1d

De cette manière, la disposition de canaux d'évacuation 6 à 9 principaux et des canaux d'évacuation secondaires par rapport à celle des canaux d'alimentation 2 à 5 combinée à la configuration géométrique fractale similaire de ces canaux permet ainsi d'obtenir une répartition et une évacuation homogène du fluide sur l'ensemble de la plaque 1 avec des pertes de charges identiques. Le parcours moyen d'un élément de gaz réactif entre son entrée sur la plaque et sa sortie est ainsi sensiblement égal, notamment en terme de longueur et de pertes de charge, quel que soit son cheminement afin d'assurer une répartition homogène sur la surface.

En outre, la disposition des canaux d'évacuation dans lequel chemine le fluide relativement moins riche en réactif, après passage au travers d'une couche de diffusion des gaz de la pile, à proximité des canaux d'alimentation dans lesquels le fluide est relativement riche en réactif est également particulièrement avantageuse pour un fonctionnement optimal de la pile.

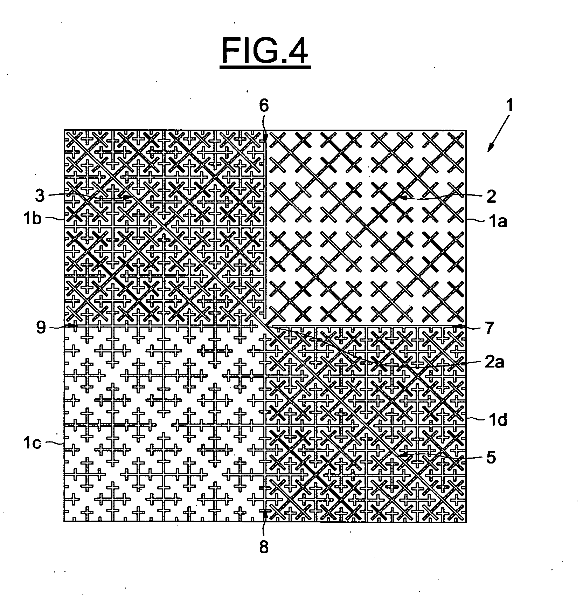

Le mode de réalisation illustré sur la figure 4 diffère en ce que les canaux d'alimentation 2 à 5, les canaux d'évacuation principaux 6 à 9, et les canaux d'évacuation secondaires présentent une largeur constante et des profondeurs variables, en conservant toutefois des rapports de sections identiques à ceux décrits au mode de réalisation précédent de manière à obtenir une distribution et une évacuation homogène sur la plaque.

**Revendications**

**1.** Plaque pour pile à combustible, notamment du type à membrane échangeuse d'ions, **caractérisée en ce qu'**elle comprend des canaux d'alimentation (2 à 5) reliés à un orifice d'admission (2a) disposé au centre d'une des faces de la plaque et des canaux d'évacuation (6 à 9) dans lesquels circulent respectivement un flux de fluide réactif à concentration relativement élevée et un flux de fluide réactif à concentration relativement faible, et **en ce que** les canaux d'alimentation et/ou d'évacuation sont ménagés sur la plaque de façon symétrique, les canaux d'alimentation et d'évacuation présentant des configurations fractales similaires et agencées de manière complémentaire pour obtenir un réseau de canaux entrelacés.

**2.** Plaque selon la revendication 1, dans laquelle les canaux d'alimentation et d'évacuation comprennent au moins deux axes de symétrie.

**3.** Plaque selon la revendication 1 ou 2, dans laquelle les canaux d'alimentation et d'évacuation comprennent des conduites principales, chaque conduite principale étant pourvue d'une pluralité de branches secondaires successives agencées de manière symétrique par rapport à ladite conduite.

**4.** Plaque selon la revendication 3, dans laquelle les longueurs et les sections des branches secondaires successives sont chaque fois égales, à partir d'un point de ramification, pour chaque conduite d'alimentation respective.

**5.** Plaque selon la revendication 3 ou 4, dans laquelle les conduites principales des canaux d'alimentation sont reliées à l'orifice d'admission (2a).

**6.** Plaque selon l'une des revendications 3 à 5, dans laquelle elle comprend quatre conduites principales s'étendant entre l'orifice d'admission (2a) et des angles de la plaque.

**7.** Plaque selon l'une des revendications 3 à 6, dans laquelle les conduites principales des canaux d'évacuation débouchent sur chacun des côtés de la plaque.

**8.** Plaque selon l'une des revendications 3 à 7, dans laquelle les rapports des sections entre des portions immédiatement consécutives ($C_{1,0}$ à $C_{5,0}$) de la conduite principale ($C_1$) sont identiques entre eux.

**Patentansprüche**

**1.** Platte für eine Brennstoffzelle, insbesondere vom Typ mit Ionenaustauschmembran, **dadurch gekennzeichnet, dass** sie Zuleitungskanäle (2 bis 5), die mit einer Einlassöffnung (2a) verbunden sind, die in der Mitte einer der Seiten der Platte angeordnet ist, und Ableitungskanäle (6 bis 9) umfasst, in denen ein reaktiver Fluidstrom mit relativ hoher Konzentration bzw. ein reaktiver Fluidstrom mit relativ geringer Konzentration zirkulieren, und dass die Zuleitungs- und/oder Ableitungskanäle auf der Platte symmetrisch angeordnet sind, wobei die Zuleitungs- und Ableitungskanäle ähnliche fraktale Konfigurationen aufweisen und auf komplementäre Weise angeordnet sind, um ein Netz von verschlungenen Kanälen zu erhalten.

**2.** Platte nach Anspruch 1, bei der die Zuleitungs - und Ableitungskanäle mindestens zwei Symmetrieachsen umfassen.

**3.** Platte nach Anspruch 1 oder 2, bei der die Zuleitungs- und Ableitungskanäle Hauptleitungen umfassen, wobei jede Hauptleitung mit einer Vielzahl von aufeinander folgenden Nebenzweigleitungen versehen ist, die symmetrisch zu der Leitung angeordnet sind.

**4.** Platte nach Anspruch 3, bei der die Längen und die Querschnitte der aufeinander folgenden Nebenzweigleitungen immer ausgehend von einem Verzweigungspunkt für jede jeweilige Zuleitung gleich sind.

**5.** Platte nach Anspruch 3 oder 4, bei der die Hauptleitungen der Zuleitungskanäle mit der Einlassöffnung (2a) verbunden sind.

**6.** Platte nach einem der Ansprüche 3 bis 5, bei der vier Hauptleitungen vorhanden sind, die sich zwischen der Einlassöffnung (2a) und den Winkeln der Platte erstrecken.

**7.** Platte nach einem der Ansprüche 3 bis 6, bei der die Hauptleitungen der Ableitungskanäle auf jeder der Seiten der Platte münden.

**8.** Platte nach einem der Ansprüche 3 bis 7, bei der die Querschnittsverhältnisse zwischen unmittelbar aufeinander folgenden Abschnitten ($C_{1,0}$ bis $C_{5,0}$) der Hauptleitung ($C_1$) miteinander identisch sind.

**Claims**

**1.** Plate for a fuel cell, in particular of the type comprising an ion-exchange membrane, **characterized in that** it comprises feed channels (2 to 5) connected to an intake orifice (2a) positioned at the center of one of the faces of the plate and discharge channels (6 to 9) in which a stream of reactive fluid at a relatively high concentration and a stream of reactive fluid at a relatively low concentration respectively move and **in that** the feed and/or discharge channels are inserted onto the plate in symmetrical fashion, the feed and discharge channels exhibiting similar fractal configurations which are arranged in complementary fashion in order to obtain a network of intertwined channels.

**2.** Plate according to Claim 1, in which the feed and discharge channels comprise at least two axes of symmetry.

**3.** Plate according to Claim 1 or 2, in which the feed and discharge channels comprise main conduits, each main conduit being provided with a plurality of successive side branches arranged in symmetrical fashion with respect to said conduit.

**4.** Plate according to Claim 3, in which the lengths and the cross sections of the successive side branches are each time equal, from a branching point, for each respective feed conduit.

**5.** Plate according to Claim 3 or 4, in which the main conduits of the feed channels are connected to the intake orifice (2a).

**6.** Plate according to one of Claims 3 to 5, comprising four main conduits extending between the intake orifice (2a) and the corners of the plate.

**7.** Plate according to one of Claims 3 to 6, in which the main conduits of the discharge channels emerge on each of the sides of the plate.

**8.** Plate according to one of claims 3 to 7, in which the ratios of the cross sections between immediately consecutive portions ($C_{1.0}$ to $C_{5.0}$) of the main conduit ($C_1$) are identical to one another.

# FIG.1

## FIG.2

# FIG.3

# FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4988583 A
- US 5641586 A
- US 6616327 B1
- US 6333019 B1
- US 20040023100 A
- US 20040076405 A